(19) Europäisches Patentamt
European Patent Office
Office européen des brevets

(11) EP 4 790 642 A1

(12) EUROPEAN PATENT APPLICATION

(43) Date of publication:
**12.08.2026 Bulletin 2026/33**

(21) Application number: **26156521.2**

(22) Date of filing: **05.02.2026**

(51) International Patent Classification (IPC):
***G06T 7/11*** *(2017.01)* ***G06V 10/74*** *(2022.01)*
***G06V 10/764*** *(2022.01)* ***G06V 20/40*** *(2022.01)*

(52) Cooperative Patent Classification (CPC):
**G06T 7/11; G06V 10/74; G06V 10/764; G06V 20/41;** G06T 2207/10016; G06T 2207/20081; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.02.2025 KR 20250015378**
**28.01.2026 KR 20260017024**

(71) Applicant: **CJ Olivenetworks Co., Ltd.**
**Seoul 04323 (KR)**

(72) Inventors:
- **LEE, Dong Ho**
  **04626 Seoul (KR)**
- **CHO, Jun Gu**
  **04626 Seoul (KR)**
- **SEO, Yi An**
  **04626 Seoul (KR)**
- **HA, Seong Jong**
  **04637 Seoul (KR)**
- **KIM, Seong Tae**
  **17104 Yongin-si, Gyeonggi-do (KR)**
- **HONG, Soyeon**
  **17104 Yongin-si, Gyeonggi-do (KR)**
- **CHANG, Joohyun**
  **17104 Yongin-si, Gyeonggi-do (KR)**
- **CHOI, Jinwoo**
  **17104 Yongin-si, Gyeonggi-do (KR)**
- **LEE, Hyogun**
  **17104 Yongin-si, Gyeonggi-do (KR)**

(74) Representative: **BCKIP Part mbB**
**Landsberger Straße 98**
**80339 München (DE)**

(54) **METHOD FOR DETECTING TARGET OBJECT APPREARANCE AREAS AND TIME INTERVALS IN VIDEO, LEARNING METHOD, AND SYSTEM THEREFOR**

(57) The present disclosure relates to a video analysis technology, and more particularly, to a method for detecting appearance time intervals and areas of a specific object in a video, a learning method, and a system therefor. The present disclosure relates to a technology that analyzes a correlation between an object image and a video, and accurately detects areas where a specific object is present in the video by reflecting spatio-temporal information.

Fig.1

User terminal (101)
Video to be analyzed (102)
Query image (103)
Computing device (100)
Analysisresult (104)

EP 4 790 642 A1

# Description

## BACKGROUND OF THE INVENTION

### Field of the Invention

The present disclosure relates to a video analysis technology, and more particularly, to a method for detecting appearance time intervals and areas of a specific object in a video, a learning method, and a system therefor. Specifically, the present disclosure relates to a technology that analyzes a correlation between an object image and a video, and accurately detects areas where a specific object is present in the video by reflecting spatio-temporal information.

### Background of the Related Art

An object detection technology plays an important role in the field of video analysis, and much research has been conducted on an operation of accurately extracting time intervals and areas where a specific object appears in a video. Existing technologies mainly operated by extracting important visual features from an image and using them to detect an object in a video. In this process, convolutional neural network (CNN) or transformer-based models are mainly utilized to extract key features from an image and find an object in video frames.

Existing object detection systems have limitations in that they cannot sufficiently reflect global and local characteristics between an image and a video. Global characteristics focus on analyzing the overall structure and shape of an object image, and local characteristics emphasize details in an image to detect an object. Existing models have a problem in that the accuracy of object detection in a video is poor because they focus only on global characteristics or do not deal with local characteristics separately.

Recently, technical attempts have been made to simultaneously consider the global and local characteristics of an object image and an object in a video. However, even these technologies still have limitations in improving the accuracy of object detection, and have difficulty in handling deformation of an object that can occur in various environments. Accordingly, more sophisticated and accurate object detection technology is required.

## CITATION LIST

### Patent Literature

(Patent Document 1) Korean Patent Registration No. 10-2765937 (registered on February 5, 2025)

## SUMMARY OF THE INVENTION

An aspect of the present disclosure is to provide a technology that can accurately detect a specific object in a video. Existing object detection technologies have limitations in detection performance because they cannot simultaneously reflect global and local characteristics between an object image and a video. Furthermore, it is difficult to provide robust performance against deformation of an object that can occur in various environments.

In addition, the present disclosure provides a technology for more accurately detecting appearance time intervals and areas of a specific object in a video by considering both global and local characteristics of an object image. Through this, object detection accuracy may be improved by simultaneously reflecting the overall characteristics of the object image and the detailed characteristics in the image.

Moreover, the present disclosure is designed to exhibit robust object detection performance even in various environments and conditions, thereby solving problems that existing technologies have not solved.

Besides, the present disclosure proposes a technical solution that improves object detection performance by more precisely analyzing a correlation between an object image and a video, and provides stable performance even in various situations. Through this, the accuracy and robustness of object detection technologies may be improved simultaneously.

Meanwhile, technical problems of the present disclosure are not limited to the above-mentioned problems, and other technical problems which are not mentioned herein will be clearly understood by those skilled in the art from the description below.

In order to solve the foregoing problems in the related art, a method for detecting, by a computing device including a processor and a memory, target object appearance areas and time intervals in a video according to one embodiment of the present disclosure may include receiving a video to be analyzed and a query object image from a user terminal; extracting a plurality of frames from the video to be analyzed; extracting video features based on the plurality of frames; extracting a query image feature based on the query object image; decomposing the query image feature into a query token and a query feature; generating a global attention guide and a local attention guide based on the query token, the query feature, and the video features; calculating a second video feature based on the global attention guide, the local attention guide, the video features, and the query token; and extracting time intervals and areas in a video in which the query object image appears based on the second video feature.

Furthermore, in the method for detecting target object appearance areas and time intervals in a video according to one embodiment of the present disclosure, the steps (b) and (c) may be performed by a pre-trained video encoder artificial intelligence model.

Furthermore, in the method for detecting target object appearance areas and time intervals in a video according to one embodiment of the present disclosure, the step (d) may be performed by a pre-trained image encoder artificial intelligence model.

Furthermore, in the method for detecting target object appearance areas and time intervals in a video according to one embodiment of the present disclosure, in the step (f), the global attention guide may be generated based on a matrix product between the query token and video features.

Furthermore, in the method for detecting target object appearance areas and time intervals in a video according to one embodiment of the present disclosure, the step (f) may further include a step (f-1) of performing centralization on the query feature, and performing singular value decomposition on the centralized query feature to compute a central normalization query feature and a principal component, wherein the local attention guide is generated based on a matrix product between the central normalization query feature and the principal components.

Furthermore, in the method for detecting target object appearance areas and time intervals in a video according to one embodiment of the present disclosure, the step (g) may be performed by a spatial decoder, wherein the global attention guide acts as a bias for a self-attention of the spatial decoder, and the local attention guide acts as a bias for a cross-attention of the spatial decoder.

Furthermore, in the method for detecting target object appearance areas and time intervals in a video according to one embodiment of the present disclosure, the step (h) may further include visually displaying a frame time point and that area where the query object appears on the user terminal.

Meanwhile, in a computing device that provides a method for detecting target object appearance areas and time intervals in a video according to one embodiment of the present disclosure, the computing device including a processor and a memory, the processor may execute instructions for executing a method for detecting target object appearance areas and time intervals in a video stored in the memory, wherein the method for detecting target object appearance areas and time intervals in the video includes receiving a video to be analyzed and a query object image from a user terminal; extracting a plurality of frames from the video to be analyzed; extracting video features based on the plurality of frames; extracting a query image feature based on the query object image; decomposing the query image feature into a query token and a query feature; generating a global attention guide and a local attention guide based on the query token, the query feature, and the video features; generating second video features based on the global attention guide, the local attention guide, the query token, and the video features; and extracting time intervals and areas in a video in which the query object image appears based on the second video features.

Meanwhile, in a learning method for learning, by a learning device including a memory and a processor, a network for detecting target object appearance areas and time intervals in a video according to one embodiment of the present disclosure, the learning method may include receiving a first input video and first object image data corresponding to the first input video; generating various corresponding query images from the first object image, and selecting some thereof to use them as a first query object image; extracting a plurality of frames from the first input video; extracting first video features from the plurality of video frames; extracting a first query object image feature based on the first query object image; decomposing the first query object image feature into a first query token and a first query feature; generating a global attention guide and a local attention guide based on the first query token, the first query feature, and the first video features; generating a second video feature based on the global attention guide, the local attention guide, the first query token, and the first video features; generating a corresponding representation score map based on the first query feature and the second video features; computing a corresponding representation loss based on the corresponding representation score map; calculating a bounding box and confidence level based on the second video feature, and computing a bounding appearance time interval loss and confidence loss; and updating a network parameter to minimize the corresponding representation loss, the appearance time interval loss, and the confidence loss.

Furthermore, in the method for detecting target object appearance areas and time intervals in a video according to one embodiment of the present disclosure, the step (a) may be executed for a plurality of input videos and corresponding object image data other than the first input video and the first object image data.

Furthermore, in the method for detecting target object appearance areas and time intervals in a video according to one embodiment of the present disclosure, the step (b) may be generated to include changes in different time points, sizes, backgrounds, lighting, and the like, based on a plurality of instances of the same object in the first input video.

Furthermore, in the method for detecting target object appearance areas and time intervals in a video according to one embodiment of the present disclosure, in the step (f), the global attention guide may be generated based on a matrix product between the first query token and the first video features.

Furthermore, in the method for detecting target object appearance areas and time intervals in a video according to one embodiment of the present disclosure, the step (f) may further include a step (f-1) of performing centralization on the first query feature, and performing singular value decomposition on the centralized first query feature to compute a first central normalization query feature and a principal component, wherein the

local attention guide is generated based on a matrix product between the first central normalization query feature and the principal components.

Furthermore, in the method for detecting target object appearance areas and time intervals in a video according to one embodiment of the present disclosure, the step (i) may further include a step (i-1) of performing singular value decomposition on the second video feature to extract one or more principal components, wherein the corresponding representation score map is generated by projecting the first query feature onto the principal component and then applying a correction function.

Furthermore, in the method for detecting target object appearance areas and time intervals in a video according to one embodiment of the present disclosure, in the step (j), the corresponding representation loss may include a token entropy loss and a map entropy loss.

Meanwhile, in a learning device for learning a network for detecting target object appearance areas and time intervals in a video according to one embodiment of the present disclosure, the learning device including a processor and a memory, the processor may execute instructions for executing a learning method for learning target object appearance areas and time intervals in a video stored in the memory, the learning method including receiving a first input video and first object image data corresponding to the first input video; generating various corresponding query images from the first object image, and selecting some thereof to use them as a first query object image; extracting a plurality of frames from the first input video; extracting first video features from the plurality of video frames; extracting a first query object image feature based on the first query object image; decomposing the first query object image feature into a first query token and a first query feature; generating a global attention guide and a local attention guide based on the first query token, the first query feature, and the first video features; generating second video features based on the global attention guide, the local attention guide, the first query token, and the first video features; generating a corresponding representation score map based on the first query feature and the second video features; computing a corresponding representation loss based on the corresponding score map; calculating a bounding box and confidence level based on the second video feature, and computing a bounding appearance time interval loss and confidence loss; and updating a network parameter to minimize the corresponding representation loss, the appearance time interval loss, and the confidence loss.

The present disclosure provides a technology that can more accurately detect a specific object in a video. Global and local characteristics of an object image may be simultaneously considered, thereby providing more accurate object detection technology in a video. Global characteristics reflect the overall structure and shape of an object, and local characteristics emphasize details in an object image, which greatly improves detection performance. This allows more precise extraction of time intervals and areas where an object appears in a video, and improves the accuracy of object detection.

Furthermore, the present disclosure is designed to exhibit robust performance against deformation of an object that can occur in various environments and conditions. While existing technologies have difficulty in providing robust detection performance against a change or deformation of an object, the present disclosure maintains stable performance even in a changing environment. This allows object detection with high reliability even on various video datasets.

In addition, the present disclosure improves the performance of object detection by more precisely analyzing a correlation between an object image and a video. The present disclosure may solve the problem that existing technologies cannot sufficiently reflect a relationship between an object image and a video, and simultaneously improve the accuracy and robustness of object detection. For this reason, the present disclosure provides wider applicability and higher performance in the field of video analysis.

Even if the effects are not explicitly mentioned herein, the effects described in the following specification and other easily inferable effects expected by the technical features of the present disclosure are treated as described in the specification of the present disclosure.

## BRIEF DESCRIPTION OF THE DRAWINGS

FIG. 1 shows a basic view of executing a method for detecting target object appearance areas and time intervals in a video according to the present disclosure.

FIG. 2 is a flowchart of a method for detecting target object appearance areas and time intervals in a video according to one embodiment.

FIG. 3 is a block diagram of a computing device for detecting target object appearance areas and time intervals in a video according to one embodiment.

FIG. 4 is a diagram showing specific steps of a method for detecting target object appearance areas and time intervals in a video according to one embodiment.

FIG. 5 is a flowchart of a learning method for learning a network that detects target object appearance areas and time intervals in a video according to one embodiment.

FIG. 6 is a block diagram of a learning device for learning a network that detects target object appearance areas and time intervals in a video according to one embodiment.

FIG. 7 is a specific diagram of an object image selection unit 270 in a learning method for learning a network that detects target object appearance areas and time intervals in a video according to one embodiment.

FIG. 8 is a diagram showing specific steps of a learning method for learning a network that detects target object appearance areas and time intervals in a video according to one embodiment.

## DETAILED DESCRIPTION OF THE PREFERRED EMBODIMENT

The details of the objectives and technical configurations of the present disclosure and operational effects thereof will be more clearly understood from the following detailed description based on the accompanying drawings appended hereto. Hereinafter, embodiments according to the present disclosure will be described in detail with reference to the accompanying drawings.

Embodiments disclosed herein should not be interpreted as limiting or used to limit the scope of the present disclosure. It is apparent for those skilled in the art that a description including embodiments herein has various applications. Therefore, any embodiments described in the detailed description of the present disclosure are illustrative for better understanding of the present disclosure and are not intended to limit the scope of the present disclosure to the embodiments.

Functional blocks illustrated in the drawings and described hereunder are only examples of possible implementations. In other implementations, other functional blocks may be used without departing from the concept and scope of the detailed description. Furthermore, one or more functional blocks of the present disclosure are illustrated as separate blocks, but one or more of the functional blocks of the present disclosure may be a combination of various hardware and software elements that execute the same function.

In addition, an expression that some elements are "included" is an expression of an "open type", and the expression simply denotes that the corresponding elements are present, but should not be construed as excluding additional elements.

Moreover, in case where it is mentioned that one element is "connected" or "coupled" to the other element, it should be understood that one element may be directly connected to the other element, but another element may be present therebetween.

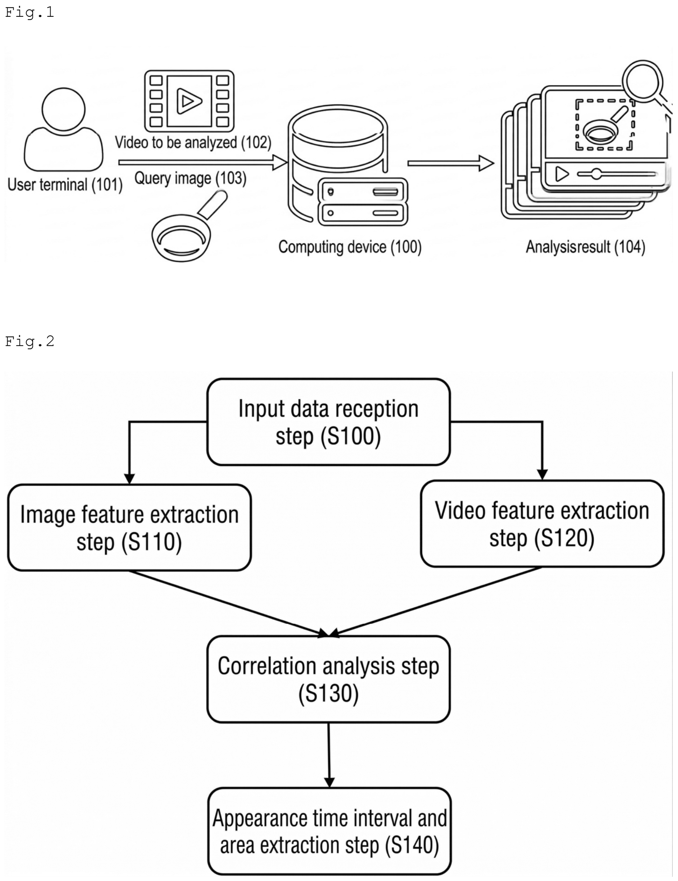

Hereinafter, the present disclosure will be described with reference to FIGS. 1 to 8.

Referring to FIG. 1, in order to execute a method for detecting target object appearance areas and time intervals in a video according to the present disclosure, a computing device 100 may receive a video 102 to be analyzed and a query image 103 from a user terminal 101. In this case, the user terminal may be a personal mobile phone, a desktop PC, or the like, but is not limited thereto.

The computing device may include a processor and a memory, and the processor is a subject that executes and controls operations performed by a service server 100, and may practically correspond to a central processing unit. The central processing unit may also be referred to as a controller, a microcontroller, a microprocessor, a microcomputer, or the like. Furthermore, the central processing unit may be implemented by hardware or firmware, software, or a combination thereof, and configured to include an application specific integrated circuit (ASIC) or a digital signal processor (DSP), a digital signal processing device (DSPD), a programmable logic device (PLD), or a field programmable gate array (FPGA) when implemented using hardware, and configured with firmware or software to include a module, a procedure, a function or the like that performs the foregoing functions or operations when implemented using firmware or software. In addition, the memory of the service server 100 may be implemented as Read Only Memory (ROM), Random Access Memory (RAM), Erasable Programmable Read Only Memory (EPROM), Electrically Erasable Programmable Read-Only Memory (EEPROM), flash memory, Static RAM (SRAM), a hard disk drive (HDD), a solid state drive (SSD) or the like.

Meanwhile, the video 102 to be analyzed used in the present disclosure may refer to a video file including a scene in which an object appears, and may refer to a video file or consecutive image files of various extensions without being limited to a specific encoding method or format. The video 102 to be analyzed may have various resolutions and frame rates, and may be utilized as a main data source for object detection in a video according to the present disclosure.

The query image 103 may be an image representing a specific object to be detected in the video 102 to be analyzed. The query image 103 includes the main visual characteristics of an object, and is used to accurately identify that object in a video. The query image may be a static image, and may include several types of variations to improve detection capabilities for various object variations. The query image 103 is not limited to a specific format and may be data represented as image files or vector values of various extensions.

The computing device 100 extracts appearance time intervals and areas of an object of the query image 103 in a video 102 to be analyzed based on a correlation between the query image 103 and the video 102 to be analyzed to generate an analysis result 104. The analysis result 104 includes a time interval in which an object of the query image 103 appears in the video and an area (bounding box) occupied by that object. The analysis results 104 may be visually displayed on the screen or provided in the form of an output file. For example, a time interval in which an object appears on a video player screen may be highlighted, or an area in which the object appears may be marked with a box for each frame so as to allow a user to easily identify the location of the object.

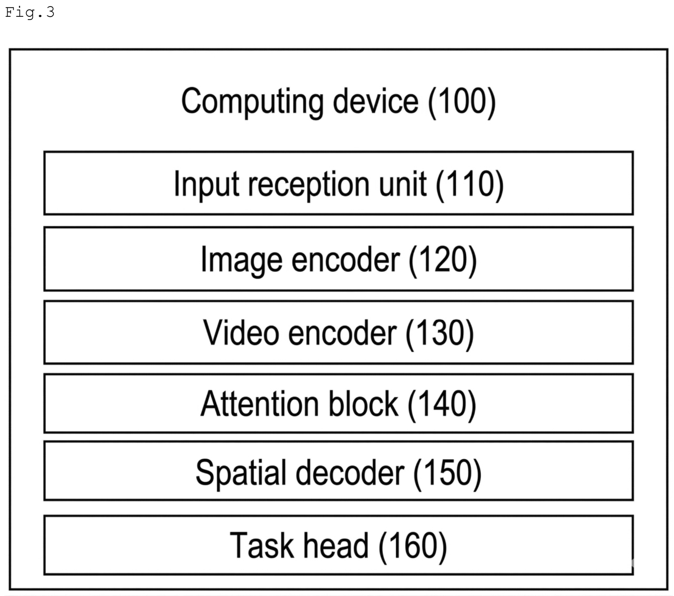

FIG. 2 is a flowchart of a method for detecting target object appearance areas and time intervals in a video according to one embodiment. Furthermore, FIG. 3 is a block diagram of a computing device for detecting

target object appearance areas and time intervals in a video according to one embodiment.

Each step of FIG. 2 may be performed by each computing unit of FIG. 3.

First, an input data reception step (S100) of FIG. 2 is receiving a video to be analyzed and a query image from a user. A method of receiving input data in this step is not limited to a specific interface, and may vary depending on the implementation method. The input data reception step (S100) is performed by an input reception unit 110 of the computing device 100 of FIG. 3, and the received video to be analyzed and query image may be stored in the memory in the computing device.

Next, an image feature extraction step (S110) of FIG. 2 is performed by an image encoder 120 in the computing device 100 of FIG. 3, and is extracting a feature for the query image received in the input data reception step (S100). The image encoder 120, which is an artificial intelligence model that serves to extract visual information from an image to transform it into a high-dimensional vector, may be a convolutional neural network (CNN)-based model or a transformer-based model. In this embodiment, a transformer-based model will be described. When utilizing a vision transformer series model, the input query image is divided into patches of a predetermined size, the pixel values are flattened for each patch to become a one-dimensional vector, and then transformed into a fixed-dimensional embedding vector through a linear or nonlinear transformation. The embedding vector is used as an input to the transformer model, which may learn a relationship between patches and extract an overall visual feature of the image.

Additionally, a CLS token plays an important role in the vision transformer series model. In the vision transformer series model, a classification (CLS) token is added to a first location of an input sequence. The CLS token contains information representing the entire image, and collectively reflects the overall features of the image while interacting with each patch in the image through an attention mechanism of the transformer model. During the learning process, the CLS token is combined with information from each patch to capture the overall characteristics of the image, and ultimately plays an important role in image classification or feature extraction operations. In particular, a final output of the CLS token may be used to derive a classification result of the image.

The image encoder 120 may be a pre-trained model based on the foregoing method, and may exist in the computing device 100, or may have a structure that is located on an external server to communicate through an API. This model may have been trained on a large image dataset to learn how to embed images effectively.

In this step, the image encoder 120 may vectorize the input query image, and decompose it into a query token and a query feature. Here, the query token refers to a CLS token, and the remaining image patches are vectorized as a query feature.

Next, a video feature extraction step (S120) of FIG. 2 is performed by a video encoder 130 in the computing device 100 of FIG. 3, and is extracting a feature for a video to be analyzed that has received in the input data reception step (S100). The video encoder 130, which is an artificial intelligence model that serves to extract visual information from a video to transform it into a high-dimensional vector, may be a convolutional neural network (CNN)-based model or a transformer-based model.

In the extracting of a feature for the video to be analyzed, a plurality of video frames are extracted, and then an operation of vectorizing each video frame is performed. In this case, each video frame may be vectorized and is the same encoder as the image encoder 120, or a feature of the video frame may be extracted using a separate pre-trained encoder. In this step, t vectorized features (a number of frames) are generated for each video frame, and these feature vectors are named video feature vectors, which contain visual information of the video and can be utilized for video analysis in subsequent processing steps.

Next, a correlation analysis step (S130) of FIG. 2 is generating a global attention guide and a local attention guide by utilizing a query token and a query feature generated in the image feature extraction step (S110) and video feature vectors generated in the video feature extraction step (S120). This step is performed by an attention block 140 of FIG. 3, and the attention block 140 may be a pre-trained model to analyze a correlation between a video frame feature and an image feature.

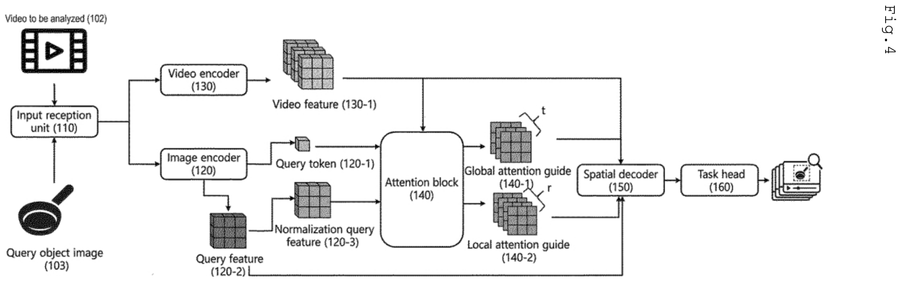

Next, based on the global attention guide and the local attention guide generated in the correlation analysis step (S130), an appearance time interval and area extraction step (S140) is performed to extract an area where the query image appears in each frame. This step is performed by a spatial decoder 150 and a task head 160 of FIG. 3, and the spatial decoder 150 provides, when the global and local attention guides, the video features, and the query feature are given, the global attention guide as a bias while computing a self-attention of the video feature corresponding to each frame, and provides the local attention guide as a bias while computing a cross-attention between the video feature and the query feature to calculate a second video feature. Then, the task head 160 may be a pre-trained model to calculate a bounding box and confidence score for an area in which the query image is located in each frame based on the second video feature. A method for extracting an appearance area in each frame will be described in detail with reference to FIG. 4.FIG. 4 is a diagram showing specific steps of a method for detecting target object appearance areas and time intervals in a video according to one embodiment.

In order to help understand the diagram, the identifiers shown in FIG. 4 are set to be the same as each part in the computing device 100 of FIG. 3.

First, the input reception unit 110 may serve to

receive a query image 103 and a video 102 to be analyzed from a user, and transmit them to an image encoder 120 and a video encoder 130.

The image encoder 120 may be utilized in the image feature extraction step (S110) of FIG. 2, and may serve to decompose the query image 103 received from the input reception unit 110 into a query token 120-1 and a query feature 120-2.

The video encoder 130 may be utilized in the video feature extraction step (S120) of FIG. 2, and may extract each frame of the video 102 to be analyzed that has received from the input reception unit 110, and may generate a video feature 130-1 for each frame.

Next, the attention block 140 may compute a global attention guide 140-1 and a local attention guide 140-2 by utilizing the query token 120-1, the query feature 120-2, and the video features 130-1.

The global attention guide 140-1 provides a guide for effectively identifying an area related to a query in a video by utilizing global object information included in the query token 120-1, and may be generated based on a matrix product between the query token 120-1 and the video features 130-1. Specifically, an attention score is computed between the query token 120-1

$$Z_{cls}^{L-1} \in \mathbb{R}^{D}$$

acquired from a layer prior to a final layer of the image encoder and the video features 130-1

$$Z_{video}^{L-1} \in \mathbb{R}^{M \times D}$$

acquired from a layer prior to a final layer of the video encoder, which can be expressed as Equation 1 below.

[Equation 1]

$$\alpha_{global} = \sigma\left(Z_{cls}^{L-1} W_Q \left(Z_{video}^{L-1} W_K\right)^{\intercal}\right) \in \mathbb{R}^{M}$$

$\sigma(\cdot)$ is a sigmoid function applied to a frame-level average score, and $W_O$ and $W_K$ are query and key projection matrices used in the video encoder.

Next, prior to computing the local attention guide 140-2, performing centralization on the query feature 120-2, and performing low-rank singular value decomposition on the centralized query feature to extract one or more principal components may be further included. The low-rank singular value decomposition may extract r principal components by performing singular value decomposition by utilizing only the top r components. A central normalization query feature 120-3 $\tilde{\mathbf{Z}}_{query}$ may be obtained for the query feature 120-2 $\mathbf{Z}_{query}$, and low-rank singular value decomposition is performed on the top r as shown in Equation 2.

[Equation 2]

$$\tilde{Z}_{query} \approx U \Sigma V_{\tilde{Z}_{query}}^{\intercal}$$

In this case,

$$U \in \mathbb{R}^{N \times R}$$

represents a row space,

$$\Sigma \in \mathbb{R}^{R \times R}$$

represents a singular value matrix, and

$$V_{\tilde{Z}_{query}}^{\intercal} \in \mathbb{R}^{D \times R}$$

represents R singular vectors.

The local attention guide 120-2 may be generated by R based on a matrix product between the central normalization query feature 120-3 and the R principal components. Specifically, a local attention score map may be defined as shown in Equation 3 below.

[Equation 3]

$$S = \varnothing\left(\tilde{Z}_{query} V_{\tilde{Z}_{query}}\right) \in [0,1)^{N \times R}$$

A matrix product between the central normalization query feature 120-3 $\tilde{Z}_{query}$ and the R singular vectors $V_{\tilde{Z}_{query}}$ is performed, and then a Ø function is applied. The Ø function may be defined as shown in Equation 4.

[Equation 4]

$$\varnothing(x) = 1 - e^{-x^2/\tau}$$

The Ø function is an element-specific activation function that corrects a negative direction of the singular vectors, where $\tau$ is a scaling parameter that controls a steepness of a curve.

Based on the computed local attention score map S, an r-th column vector

$$s_r \in \mathbb{R}^{N}$$

is repeated *M* times to generate a local attention guide

$$\alpha^{r}_{\text{local}}$$

as shown in Equation below.

[Equation 5]

$$\alpha^{r}_{\text{local}} = [s_r, s_r, \cdots, s_r] \in [0,1)^{M \times N}$$

That is, the local attention guide 140-2 emphasizes a specific part of an object by projecting the central normalization query feature 120-3 into the singular vectors of the central normalization query feature 120-3.

Next, the spatial decoder 150 may calculate a second video feature that encapsulates an area in which the query image appears in each video frame. The spatial decoder may be designed as a transformer-based model and may include a self-attention and a multi-head cross attention.

First, the self-attention represents a relationship between respective patches of a video feature, and in this case, the global attention guide 140-1 $\alpha_{\text{global}}$ may act as a bias for the self-attention to serve to help the model so as to identify an overall location of the query image. Accordingly, the modified self-attention of the spatial decoder 150 may be expressed as shown in the following Equation 6.

[Equation 6]

$$A_{\text{self}} = \text{Softmax}\left(\frac{Q_{SA}K_{SA}^{T}}{\sqrt{D}} + \alpha_{\text{global}}\right)$$

The multi-head cross attention represents a relationship between the query feature 120-2 and the video features 130-1, and in this case, the local attention guide 140-2 $\alpha^{r}_{\text{local}}$ may act as a bias for the multi-head cross attention to emphasize details in a video frame. Accordingly, the modified multi-head cross attention of the spatial decoder 150 may be expressed as in the following Equation 7.

[Equation 7]

$$A^{r}_{\text{cross}} = \text{Softmax}\left(\frac{Q^{r}_{CA}{K^{r}_{CA}}^{T}}{\sqrt{D/N_{\text{head}}}} + \alpha^{r}_{\text{local}}\right)$$

In this case,

$$Q^{r}_{CA}$$

and

$$K^{r}_{CA}$$

are query and key matrices of a cross-attention layer, and in order to integrate

$$\alpha^{r}_{\text{local}}$$

into a multi-head cross-attention, a number of heads $N_{\text{head}}$ of the multi-head cross-attention and a number of principal components R in the low-rank singularity decomposition are set to the same value.

The values of the self-attention

$$A_{\text{self}}$$

and the cross-attention value $A^{r}_{\text{cross}}$ computed by the above Equation are defined as a spatial correspondence score map.

The spatial decoder 150 calculates second video features based on the spatial correspondence score map and the video features 130-1.

Lastly, the task head 160 calculates time intervals in a video in which the query object image 130 appears, and a bounding box and confidence score of the query object image based on the second video features.

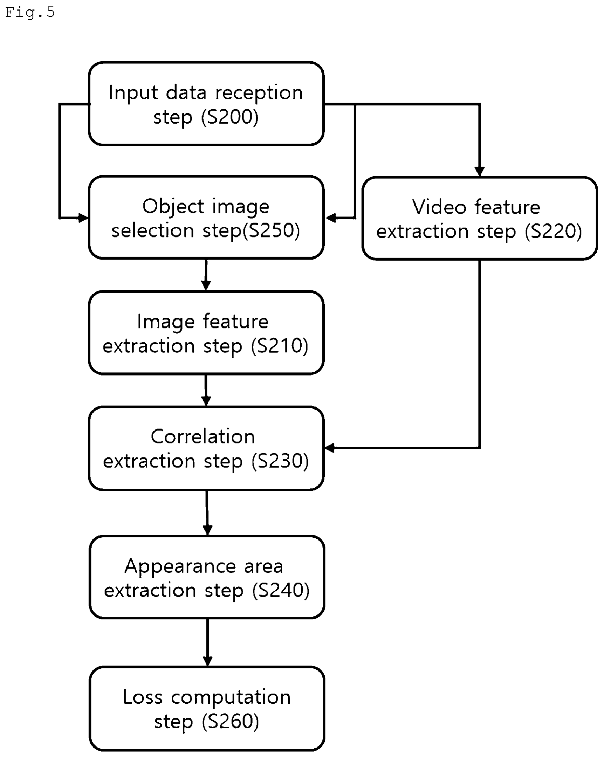

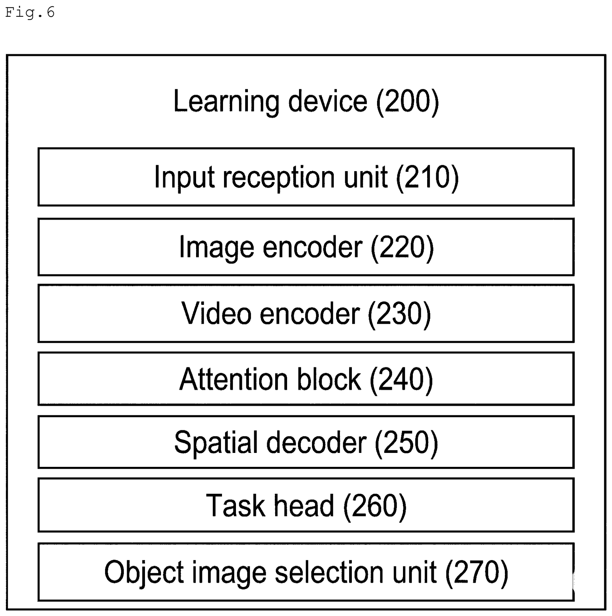

Next, FIG. 5 is a flowchart of a learning method for learning a network that detects target object appearance areas and time intervals in a video according to one embodiment. Furthermore, FIG. 6 is a block diagram of a learning device for learning a network that detects target object appearance areas and time intervals in a video according to one embodiment.

First, an input data reception step (S200) of FIG. 5 is performed by an input reception unit 210 in a learning device 200 of FIG. 6, and that step is receiving a video corresponding to a query object image required for learning. A plurality of learning data may be input in parallel, and the input reception unit 210 may perform batch data processing, and the like. In this embodiment, it is assumed that a pair of data is input to help understanding. The pair of data is named a first input video and a first object image.

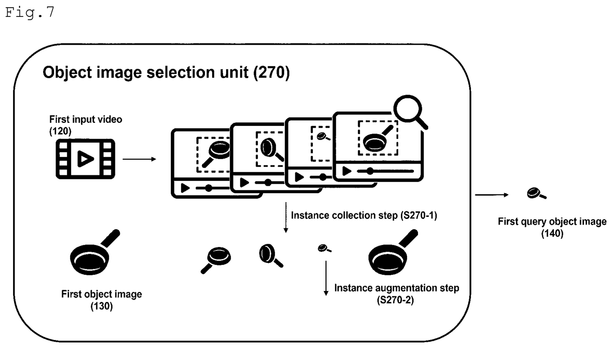

Next, an object image selection step (S250) of FIG. 5 receives the first input video and the first object image received in the input data reception step (S200). This step is performed by the object image selection unit 270 of FIG. 6, and the object image selection unit 270 will be described in more detail with reference to FIG. 7.

FIG. 7 is a specific diagram of the object image selection unit 270. The object image selection unit 270, which is a module designed for the purpose of data augmentation, is used to generate various corresponding query object images.

First, the object image selection unit 270 col-

lects all instances of the first object image 130 input from the first input video 120 of FIG. 7. Then, one instance of them is randomly selected, and the existing first object image 130 is replaced with a first query object image 140 with a predetermined probability. As an object instance may vary in size or rotation over time in a video due to changes in shooting location, angle, and the like, all instances reflecting these changes are collected.

In an instance collection step (S270-1) of FIG. 7, it can be seen that instances corresponding to the first object image 130 are rotated or changed in size for each video frame. In this case, all object instances corresponding to the first object image 130 are collected, and then one instance is randomly selected among them. A data augmentation technique is applied to the selected object instance with a predetermined probability, and the augmented instance becomes the first query object image 140 with a predetermined probability to replace the first object image 130.

The data augmentation method includes rotation, resizing, cropping, flipping, left and right/up and down inversion, brightness/chroma change, noise addition, color change, distortion, filter application, and the like, but are not limited thereto.

As described above, the object image selection unit 270 may perform a role in augmenting data so as to train correspondence to various variations of the same object, and provide more data during training so as to allow an artificial intelligence model of the present disclosure to more clearly understand a relationship between objects in various contexts.

Next, an image feature extraction step (S210) of FIG. 5 is performed by an image encoder 220 in the learning device 200 of FIG. 6, and is extracting a feature of a corresponding first query object image selected in the object image selection step (S250). The image encoder 220 utilized in this step may be an artificial intelligence model based on a transformer that has previously performed representation learning on a large-scale dataset. When a pre-trained model is used, parameters of the image encoder 220 in the training step may not be included in the training.

In this step, the image encoder 120 may vectorize the input query image, and decompose it into a query token and a query feature. Here, the query token refers to a CLS token, and the remaining image patches are vectorized as a query feature.

A video feature extraction step (S220) of FIG. 5 is performed by a video encoder 230 in the learning device 200 of FIG. 6, and is extracting a feature of the first input video received in the input data reception step (S200). The video encoder 230 utilized in this step extracts a plurality of video frames from the first input video, and then performs an operation of vectorizing each video frame. In this case, each video frame may be vectorized using the same encoder as the image encoder 220, or a feature of the video frame may be extracted using a separate pre-trained encoder. In this step, t vectorized features (a number of frames) are generated for each video frame, and these feature vectors are named first video features. They contain visual information of the video and may be utilized for learning in subsequent processing steps. When the video encoder 230 uses a pre-trained model, the parameters of the video encoder 230 may not be included in the training in the training step.

Next, a correlation extraction step (S230) of FIG. 5 is generating a global attention guide and a local attention guide by utilizing a query token and a query feature generated in the image feature extraction step (S210) and first video features generated in the video feature extraction step (S220). This step is performed by an attention block 240 of FIG. 6. In this case, the global, local query, key, and value parameter of the attention block 240 are learnable parameters.

Next, based on the global attention guide and the local attention guide generated in the correlation extraction step (S230), an appearance time interval and area extraction step (S240) is performed to extract an area where the query image appears in each frame. This step is performed by a spatial decoder 250 and a task head 260 of FIG. 6, and the spatial decoder 250 provides, when the global and local attention guides, the video feature, and the query feature are given, the global attention guide as a bias while computing a self-attention of the video feature corresponding to each frame, and provides the local attention guide as a bias while computing a cross-attention between the video feature and the query feature to calculate a second video feature. Then, the task head 260 is trained to calculate a bounding box and confidence score for an area in which the query image is located in each frame based on the second video feature.

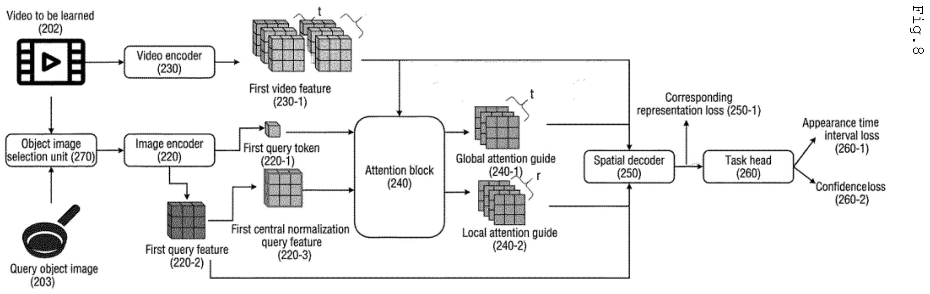

Finally, a loss computation step (S260) is computing a loss to update the parameters of the artificial intelligence model, which is performed by the learning device 200. The loss consists of a corresponding representation loss, an appearance time interval loss, and a confidence loss, and backpropagation is carried out based on the computed loss to update the parameters of the model. A specific method of computing each loss will be described with reference to FIG. 8.

FIG. 8 is a diagram showing specific steps of a learning method for learning a network that detects target object appearance areas and time intervals in a video according to one embodiment.

First, the input reception unit may serve to receive a query object image 203 and a video 202 to be learned from a data source, and transmit them to the object image selection unit 270 and the video encoder 230. The data source may be a database that is present in the learning device 200, or may be received in real time from the outside.

The object image selection unit 270 may be utilized in the object image selection step (S250) of FIG. 5, and extracts various object instances from the query object image 203 and the video 202 to be learned

received from the input reception unit 210, and selects one of them to designate as the first query object image.

The image encoder 220 may be utilized in the image feature extraction step (S210) of FIG. 5, and may serve to decompose the first query object image received from the object image selection unit 270 into a first query token 220-1 and a first query feature 220-2.

The video encoder 230 may be utilized in the video feature extraction step (S220) of FIG. 5, and may extract each frame of the video 202 to be learned received from the input reception unit 210, and may encode a feature for each frame to generate first video features 230-1.

Next, the attention block 240 may generate a global attention guide 240-1 and a local attention guide 240-2 by utilizing the first query token 220-1, the first query feature 220-2, and the first video features 230-1.

The global attention guide 240-1 and the local attention guide 240-2 may be generated through the same computing process as the generation method of the global attention guide 140-1 and the local attention guide 140-2 of FIG. 4. In this case, prior to the computation of the local attention guide 240-2, centralization may be performed based on the first query feature 220-2, and low-rank singular value decomposition may be performed on the centralized first query feature to compute a first central normalization query feature 220-3.

The generated global attention guide 240-1 and local attention guide 240-2 may be utilized as biases for a self-attention and a multi-head cross-attention during training of the spatial decoder 250.

The spatial decoder 250 computes a spatial correspondence score map based on the global attention guide 240-1 and the local attention guide 240-2, the video feature 230-1, and the first query feature 220-2, and calculates a second video feature based on the spatial correspondence score map and the video feature 230-1. The second video feature may then be transmitted to the task head 260 and utilized for a subsequent operation. In addition, the second video feature may be utilized to compute a corresponding representation loss 250-1.

Specifically, a corresponding representation score map is required to compute the corresponding representation loss 250-1, and in this case, the corresponding representation score map $S_{CORE}$ is computed by projecting a first central normalization query feature 220-3 $\tilde{Z}_{query} \in \mathbb{R}^{N \times D}$ to a principal component $V_Y \in \mathbb{R}^{D \times R}$ obtained after decomposing a second video feature $Y \in \mathbb{R}^{T \times M \times D}$ into a low-rank singular value as shown in Equation 8 below.

[Equation 8]

$$S_{CORE} = \emptyset\left(\tilde{Z}_{query} V_Y\right) \in [0,1)^{N \times R}$$

The corresponding representation loss 250-1 may be defined in the form of a combination of a token-level entropy loss $L_{token}$ and a negative map entropy loss $L_{token}$, and the token-level entropy loss and the negative map entropy loss may be defined based on the corresponding representation score map

$$S_{CORE} = \{s^i_{CORE} \in [0,1)^R\}^N_{i=1} .$$

First, the token-level entropy loss $L_{token}$ is defined as shown in Equation 9 below.

[Equation 9]

$$L_{token} = \frac{1}{N}\sum_{i=1}^{N} H(\text{Softmax}(s^i_{CORE}))$$

Next, the negative map entropy loss $L_{map}$ is defined as shown in Equation 10 below.

[Equation 10]

$$L_{map} = -H(\text{Softmax}(\frac{1}{N}\sum_{i=1}^{N} s^i_{CORE}))$$

Accordingly, the corresponding representation loss 250-1 is defined as $L_{token}$ + $L_{map}$.

The task head 260 is utilized to post-process a second video feature received from the spatial decoder 250, and predicts the location and size (bounding box) of an area where the first query object image appears in the video 202 to be learned based on the second video feature, and predicts a class of the first query object image.

Then, an appearance time interval loss 260-1 is computed for the location and size of the bounding box, and a confidence loss 260-2 is computed based on a class prediction value of the first query object image.

The appearance time interval loss 260-1 and the confidence loss 260-2 may be combined with the corresponding representation loss 250-1 and utilized to update the parameters of the entire model.

The content described in this diagram has been described only according to a specific embodiment of the present disclosure, and the present disclosure is not necessarily limited to being implemented in this manner, and various modifications may be made thereto.

In the above, a method, learning method, and system for detecting target object appearance areas and time intervals in a video according to the present disclosure has been described. Meanwhile, the present disclosure is not limited to the foregoing specific embodiments and application examples, it will be of course understood by those skilled in the art that various modifications may be made without departing from the gist of the present disclosure as defined in the following claims, and it is to be noted that those modifications should not be

understood individually from the technical concept and prospect of the present disclosure.

In particular, configurations that implement the technical features of the present disclosure included in the block diagrams and flowcharts shown in the drawings attached to this specification represent logical boundaries between the configurations. However, according to an embodiment of software or hardware, the shown configurations and functions thereof are executed in the form of stand-alone software modules, monolithic software structures, codes, services, and combinations thereof, and the functions may be implemented by being stored in a medium executable on a computer provided with a processor capable of executing the stored program codes, instructions, and the like, and therefore, all of these embodiments should also be regarded as falling within the scope of the present disclosure.

Accordingly, the accompanying drawings and technologies thereof describe the technical features of the present disclosure, but should not be simply inferred unless a specific array of software for implementing such technical characteristics is clearly described otherwise. That is, the aforementioned various embodiments may be present, and may be partially modified while having the same technical features as those of the present disclosure, and thus such modified embodiments should also be regarded as falling within the scope of the present disclosure.

Furthermore, the flowchart describes operations in the drawing in a specific sequence, but has been shown to obtain the most preferred result, and it should not be understood that such operations must be carried out in the specific sequence or sequential sequence shown, or that all shown operations must be carried out. In a specific case, multi-tasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

## DESCRIPTION OF SYMBOLS

100: Computing device
101: User terminal
102: Video to be analyzed
103: Query image
104: Analysis result

## Claims

1. A method for detecting, by a computing device comprising a processor and a memory, target object appearance areas and time intervals in a video, the method comprising:

   (a) receiving a video to be analyzed and a query object image from a user terminal;
   (b) extracting a plurality of frames from the video to be analyzed;
   (c) extracting video features based on the plurality of frames;
   (d) extracting a query image feature based on the query object image;
   (e) decomposing the query image feature into a query token and a query feature;
   (f) generating a global attention guide and a local attention guide based on the query token, the query feature, and the video features;
   (g) calculating a second video feature based on the global attention guide, the local attention guide, the video features, and the query token; and
   (h) extracting time intervals and areas in a video in which the query object image appears based on the second video feature.

2. The method of claim 1, wherein the steps (b) and (c) are performed by a pre-trained video encoder artificial intelligence model.

3. The method of claim 1, wherein the step (d) is performed by a pre-trained image encoder artificial intelligence model.

4. The method of claim 1, wherein in the step (f), the global attention guide is generated based on a matrix product between the query token and video features.

5. The method of claim 1, wherein the step (f) further comprises a step (f-1) of performing centralization on the query feature, and performing singular value decomposition on the centralized query feature to compute a central normalization query feature and a principal component, and
   wherein the local attention guide is generated based on a matrix product between the central normalization query feature and the principal components.

6. The method of claim 1, wherein the step (g) is performed by a spatial decoder,

   wherein the global attention guide acts as a bias for a self-attention of the spatial decoder, and
   wherein the local attention guide acts as a bias for a cross-attention of the spatial decoder.

7. The method of claim 1, wherein the step (h) further comprises visually displaying a frame time point and that area where the query object appears on the user

terminal.

**8.** A computing device that provides a method for detecting target object appearance areas and time intervals in a video, the computing device comprising a processor and a memory,

wherein the processor executes instructions for executing a method for detecting target object appearance areas and time intervals in a video stored in the memory, and
wherein the method for detecting target object appearance areas and time intervals in the video comprises:

(a) receiving a video to be analyzed and a query object image from a user terminal;
(b) extracting a plurality of frames from the video to be analyzed;
(c) extracting video features based on the plurality of frames;
(d) extracting a query image feature based on the query object image;
(e) decomposing the query image feature into a query token and a query feature;
(f) generating a global attention guide and a local attention guide based on the query token, the query feature, and the video features;
(g) generating second video features based on the global attention guide, the local attention guide, the query token, and the video features; and
(h) extracting time intervals and areas in a video in which the query object image appears based on the second video features.

**9.** A learning method for learning, by a learning device comprising a memory and a processor, a network for detecting target object appearance areas and time intervals in a video, the learning method comprising:

(a) receiving a first input video and first object image data corresponding to the first input video;
(b) generating various corresponding query images from the first object image, and selecting some thereof to use them as a first query object image;
(c) extracting a plurality of frames from the first input video;
(d) extracting first video features from the plurality of video frames;
(e) extracting a first query object image feature based on the first query object image;
(f) decomposing the first query object image feature into a first query token and a first query feature;
(g) generating a global attention guide and a local attention guide based on the first query token, the first query feature, and the first video features;
(h) generating a second video feature based on the global attention guide, the local attention guide, the first query token, and the first video features;
(i) generating a corresponding representation score map based on the first query feature and the second video features;
(j) computing a corresponding representation loss based on the corresponding representation score map;
(k) calculating a bounding box and confidence level based on the second video feature, and computing a bounding appearance time interval loss and confidence loss; and
(l) updating a network parameter to minimize the corresponding representation loss, the appearance time interval loss, and the confidence loss.

**10.** The learning method of claim 9, wherein the step (a) is executed for a plurality of input videos and corresponding object image data other than the first input video and the first object image data.

**11.** The learning method of claim 9, wherein the step (b) is generated to include changes in different time points, sizes, backgrounds, lighting, and the like, based on a plurality of instances of the same object in the first input video.

**12.** The learning method of claim 9, wherein in the step (f), the global attention guide is generated based on a matrix product between the first query token and the first video features.

**13.** The learning method of claim 9, wherein the step (f) further comprises:

a step (f-1) of performing centralization on the first query feature, and performing singular value decomposition on the centralized first query feature to compute a first central normalization query feature and a principal component, and
wherein the local attention guide is generated based on a matrix product between the first central normalization query feature and the principal components.

**14.** The learning method of claim 9, wherein the step (i) further comprises:

a step (i-1) of performing singular value decomposition on the second video feature to extract one or more principal components, and
wherein the corresponding representation score

map is generated by projecting the first query feature onto the principal component and then applying a correction function.

**15.** The learning method of claim 9, wherein in the step (j), the corresponding representation loss comprises a token entropy loss and a map entropy loss.

**16.** A learning device for learning a network for detecting target object appearance areas and time intervals in a video, the learning device comprising a processor and a memory,
wherein the processor executes instructions for executing a learning method for learning target object appearance areas and time intervals in a video stored in the memory, the learning method comprising:

(a) receiving a first input video and first object image data corresponding to the first input video;
(b) generating various corresponding query images from the first object image, and selecting some thereof to use them as a first query object image;
(c) extracting a plurality of frames from the first input video;
(d) extracting first video features from the plurality of video frames;
(e) extracting a first query object image feature based on the first query object image;
(f) decomposing the first query object image feature into a first query token and a first query feature;
(g) generating a global attention guide and a local attention guide based on the first query token, the first query feature, and the first video features;
(h) generating second video features based on the global attention guide, the local attention guide, the first query token, and the first video features;
(i) generating a corresponding representation score map based on the first query feature and the second video features;
(j) computing a corresponding representation loss based on the corresponding score map;
(k) calculating a bounding box and confidence level based on the second video feature, and computing a bounding appearance time interval loss and confidence loss; and
(l) updating a network parameter to minimize the corresponding representation loss, the appearance time interval loss, and the confidence loss.

Fig.1

Video to be analyzed (102)
User terminal (101)
Query image (103)
Computing device (100)
Analysisresult (104)

Fig.2

Input data reception step (S100)
Image feature extraction step (S110)
Video feature extraction step (S120)
Correlation analysis step (S130)
Appearance time interval and area extraction step (S140)

Fig.3

Computing device (100)

Input reception unit (110)

Image encoder (120)

Video encoder (130)

Attention block (140)

Spatial decoder (150)

Task head (160)

Fig.4

Video to be analyzed (102)
Input reception unit (110)
Query object image (103)
Video encoder (130)
Image encoder (120)
Video feature (130-1)
Query token (120-1)
Normalization query feature (120-3)
Query feature (120-2)
Attention block (140)
t
Global attention guide (140-1)
r
Local attention guide (140-2)
Spatial decoder (150)
Task head (160)

Fig.5

Input data reception step (S200)
Object image selection step(S250)
Video feature extraction step (S220)
Image feature extraction step (S210)
Correlation extraction step (S230)
Appearance area extraction step (S240)
Loss computation step (S260)

Fig.6

Learning device (200)

Input reception unit (210)

Image encoder (220)

Video encoder (230)

Attention block (240)

Spatial decoder (250)

Task head (260)

Object image selection unit (270)

Fig.7

Object image selection unit (270)
First input video
(120)
Instance collection step (S270-1)
First query object image
(140)
First object image
(130)
Instance augmentation step
(S270-2)

Fig.8

Video to be learned (202)
Object image selection unit (270)
Query object image (203)
Video encoder (230)
Image encoder (220)
First query feature (220-2)
First query token (220-1)
First central normalization query feature (220-3)
First video feature (230-1)
t
Attention block (240)
Global attention guide (240-1)
t
Local attention guide (240-2)
r
Spatial decoder (250)
Corresponding representation loss (250-1)
Task head (260)
Appearance time interval loss (260-1)
Confidenceloss (260-2)

Europäisches
Patentamt
European
Patent Office
Office européen
des brevets

# EUROPEAN SEARCH REPORT

Application Number
EP 26 15 6521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QI FAN ET AL: "Few-Shot Video Object Detection", ARXIV.ORG CORNELL UNIVERSITY LIBRARY, 201 OLIN LIBRARY CORNELL UNIVERSITY ITHACA, NY 14853, 7 August 2022 (2022-08-07), XP091288935, * figures 1-3 * * page 5, paragraph 1 * * page 7, paragraph 1 - paragraph 4 * * abstract * * page 11, paragraph 1 * * page 16, paragraph 2 * * page 8, paragraph 3 - paragraph 5 * * page 5, paragraph 6 * ----- | 1-16 | INV. G06T7/11 G06V10/74 G06V10/764 G06V20/40 |
| Y | CN 118 429 389 B (NANCHANG INST TECH) 6 September 2024 (2024-09-06) * paragraph [0038] * * paragraph [0089] * ----- | 1-16 | |
| A | SUN XIAOLOU ET AL: "CLAT: Convolutional Local Attention Tracker for Real-time UAV Target Tracking System with Feedback Information", 2024 IEEE/RSJ INTERNATIONAL CONFERENCE ON INTELLIGENT ROBOTS AND SYSTEMS (IROS) IEEE, 14 October 2024 (2024-10-14), pages 4912-4919, XP034807948, DOI: 10.1109/IROS58592.2024.10801760 [retrieved on 2024-12-25] * the whole document * ----- | 1-16 | TECHNICAL FIELDS SEARCHED (IPC) G06T G06V |

The present search report has been drawn up for all claims

| Place of search | Date of completion of the search | Examiner |
|---|---|---|
| The Hague | 30 June 2026 | Roy, Sylvain |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 26 15 6521

This annex lists the patent family members relating to the patent documents cited in the above-mentioned European search report. The members are as contained in the European Patent Office EDP file on
The European Patent Office is in no way liable for these particulars which are merely given for the purpose of information.

30-06-2026

| Patent document cited in search report | Publication date | Patent family member(s) | Publication date |
|---|---|---|---|
| CN 118429389 B | 06-09-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 102765937